**Europäisches Patentamt**

**European Patent Office**

**Office européen des brevets**

(11) Veröffentlichungsnummer: **0 176 825**
**B1**

(12) **EUROPÄISCHE PATENTSCHRIFT**

(45) Veröffentlichungstag der Patentschrift:
**27.09.89**

(51) Int. Cl.⁴: **B 60 D 1/06**

(21) Anmeldenummer: **85111474.4**

(22) Anmeldetag: **11.09.85**

(54) **Kugelkopfkupplung für Anhänger.**

(30) Priorität: **04.10.84 DE 8429103 U**

(43) Veröffentlichungstag der Anmeldung:
**09.04.86 Patentblatt 86/15**

(45) Bekanntmachung des Hinweises auf die Patenterteilung:
**27.09.89 Patentblatt 89/39**

(84) Benannte Vertragsstaaten:
**AT BE CH DE FR GB IT LI NL SE**

(56) Entgegenhaltungen:
**DE-A- 1 964 974**
**DE-A- 2 245 087**
**DE-U- 7 238 345**
**US-A- 2 714 912**
**US-A- 3 679 234**

(73) Patentinhaber: **Westfalia-Werke Franz Knöbel & Söhne KG, Am Sandberg 45, D-4840 Rheda-Wiedenbrück (DE)**

(72) Erfinder: **Braun, Dieter, Dipl.-Ing., Robert-Schumann-Strasse 6, D-4840 Rheda-Wiedenbrück (DE)**

(74) Vertreter: **Müller, Gerd et al, Patentanwälte HEMMERICH-MÜLLER-GROSSE-POLLMEIER-MEY Hammerstrasse 2, D-5900 Siegen 1 (DE)**

## Beschreibung

Die Erfindung betrifft eine Kugelkopfkupplung für Anhänger mit einem Kupplungsgehäuse, das an seinem vorderen Ende als Teil einer Hohlkugel ausgebildet ist und in dem schwenkbar eine Kugelpfanne sitzt, wobei die Hohlkugel und die Kugelpfanne mit einem an einem Zugfahrzeug befestigten Kugelkopf in Eingriff bringbar sind und die Kugelpfanne in ihrer Eingriffslage relativ zur Hohlkugel des Kupplungsgehäuses arretierbar ist. Kugelkopfkupplungen dieser Gattung sind bereits in vielen verschiedenen Ausführungsformen bekannt, die bspw. aus der DE-A 1 964 974, der DE-B 2 245 087 und dem DE-U 7 923 780 hervorgeht.

Hinsichtlich ihrer Funktionssicherheit und in ihrer Wirkungsweise haben sich diese Kugelkopfkupplungen auch im praktischen Betrieb bewährt. Zur Minderung der Reibung und des daraus resultierenden Verschleisses werden bei diesen bekannten Kugelkopfkupplungen die Hohlkugel des Kupplungsgehäuses und die darin schwenkbar gelagerte Kugelpfanne sowie auch der am Zugfahrzeug befestigte Kugelkopf durch Anbringen einer Fettauflage geschmiert.

Abgesehen davon, dass die Schmierfettauflage in gewissen Zeitabständen erneuert, zumindest aber ergänzt, werden muss, besteht auch erhebliche Veschmutzungsgefahr für Hände und Kleidung der die Kugelkopfkupplung bedienenden Personen oder auch von Passanten, die, bspw. zum Überqueren der Fahrbahn, zwischen zwei hintereinander geparkten Fahrzeugen durchgehen müssen und dabei mit ihrer Kleidung die mit Fett behafteten Teile der Kugelkopfkupplung berühren.

Zur teilweisen Ausschaltung dieses Mangels wird der am Zugfahrzeug sitzende Kugelkopf nach dem Abkuppeln des Anhängers durch Aufstecken einer Schutzkappe abgeschirmt, wie das bspw. aus dem DE-U 7 238 345, dem DE-U 7 628 618 und auch dem DE-U 8 006 147 hervorgeht.

Nach der US-A 3 679 234 ist es für Kugelkopfkupplungen gattungsgemässer Art bereits bekannt, die Mantelfläche des am Zugfahrzeug befestigten Kugelkopfes mit einer Schichtauflage aus verschleissfestem Kunstoff zu versehen, und zwar zu dem Zweck, die Reibwerte zwischen diesem Kugelkopf sowie der Hohlkugel der Kugelpfanne des am Anhänger sitzenden, zugehörigen Kupplungsgehäuses zu vermindern und dadurch die nachteilige Fettschmierung zu vermeiden.

Eine Unzulänglichkeit des Kugelkopfes nach US-A 3 679 234 besteht jedoch darin, dass die mit der Kunststoffschicht versehene Mantelfläche ständig frei liegt und daher durch Auftreffen scharfer und rauher Gegenstände leicht beschädigt und durchbrochen werden kann. Es wird dann – zumindest bereichsweise – die metallische Oberfläche des Kugelkopfes wieder freigelegt, so dass sich beim Zusammenwirken mit dem Kupplungsgehäuse nicht nur die unerwünscht hohen Reibwerte wieder einstellen, sondern als Folge des Fehlens der Fettschmierung auch Korrosionsschäden auftreten.

Beschädigungen und die hieraus resultierenden Folgen können auch bei der Ausgestaltung nach US-A 3 679 234 nur vermieden werden, wenn die Kunststoffschicht des Kugelkopfes nach dem Lösen und Ausrücken des Kupplungsgehäuses durch eine Schutzkappe oder dergleichen abgeschirmt wird, die das Auftreffen scharfer oder rauher Gegenstände auf die Kunststoffschicht wirksam unterbindet.

Die bereits oben im Zusammenhang mit den Nachteilen der Fettschmierung erwähnten Schutzkappen oder dergleichen können also auch hier letztlich nicht vermieden werden.

Der Erfindung liegt die Aufgabe zugrunde, für eine Kugelkopfkupplung der eingangs angegebenen Gattung eine Ausbildung anzugeben, die völlig ohne Fettschmierung nicht nur niedrige Reibwerte erreicht und minimalem Verschleiss unterliegt, sondern darüberhinaus auch noch die umständliche und unzuverlässige Benutzung von Schutzkappen oder dergleichen für den Kugelkopf unterbindet.

Zur Lösung dieser Aufgabe ist nach der Erfindung vorgesehen, dass die Innenfläche der Hohlkugel des Kupplungsgehäuses und die Innenfläche der Kugelpfanne mit einer Schichtauflage aus verschleissfestem Kunststoff versehen ist.

Der Vorteil dieser Ausbildung liegt dabei in der gegen Beschädigungen durch Auftreffen scharfkantiger oder rauher Gegenstände völlig geschützten bzw. verkapselten Lage der Kunststoffschicht.

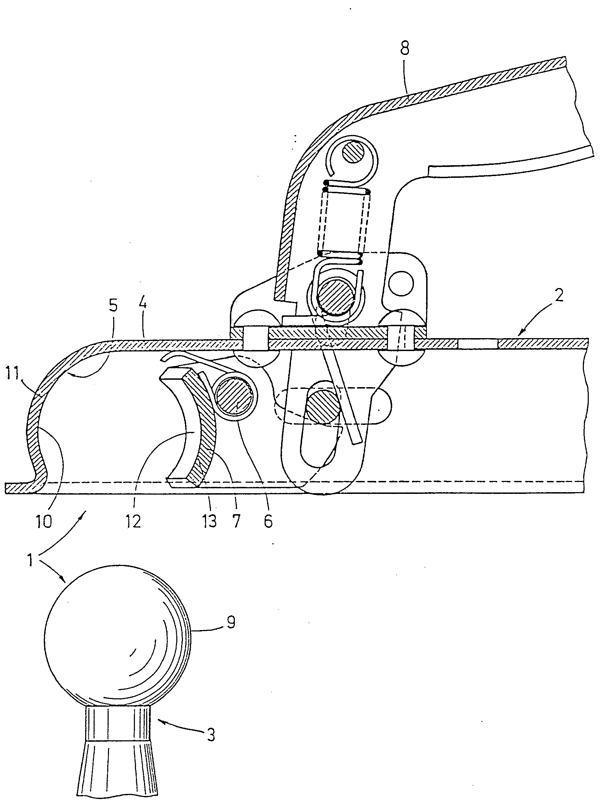

Besonders bewährt hat es sich bei einer erfindungsgemässen Kugelkopfkupplung, wenn die Kunststoffschicht aus Polytetrafluoräthylen besteht und darüberhinaus auf Oberflächen in der Hohlkugel und an der Kugelpfanne aufgebracht ist, die mindestens eine natürlich gebildete Oberflächenrauhheit haben, gegebenenfalls aber auch mit künstlichen Aufrauhungen versehen sind um einen dauerhaft sicheren Halt der Kunststoffschicht zu gewährleisten. Die einzige Figur der Zeichnung zeigt eine Kugelkopfkupplung im Längsschnitt.

Die Kugelkopfkupplung 1 besteht in üblicher Weise aus einem an der Deichselspitze eines Anhängers befestigten Kupplungsteil 2 und einem am Heck des Zugfahrzeugs befestigten Kupplungsteil 3.

Das Kupplungsteil 2 hat dabei ein Kupplungsgehäuse 4, welches an seinem vorderen Ende so geformt ist, dass es einen als Hohlkugel 5 gestalteten Teilabschnitt bildet. Innerhalb des Kupplungsgehäuses 4 ist ausserdem um eine horizontale Achse 6 verschwenkbar eine Kugelpfanne 7 gelagert, die in Öffnungsrichtung von einer Feder beaufschlagt wird und in ihrer Schliessstellung entgegen der Kraftwirkung dieser Feder arretiert werden kann. Die Arretierung ist dabei so ausgelegt, dass sie durch Betätigung eines Handgriffs 8 entgegen der Kraftwirkung weiterer Federelemente aufgehoben werden kann und dann die Kugelpfanne 7 zur Bewegung in ihrer Öffnungsstellung freigibt. Sobald sich die Kugelpfanne 7 in Richtung auf ihre Freigabestellung bewegt, wird die Arretiervorrichtung unter Vorspannung in einer Bereitschaftsstellung blockiert. Wird das am Anhänger sitzende Kupplungsteil 2 mit seinem die Hohlkugel 5 enthaltenden Teilabschnitt auf den Kugelkopf 9 des fahrzeugseitigen Kupplungsteils 3 aufgesetzt, dann ergibt sich zwangs- läufig eine Rückschenkbewegung der Kupp- lungspfanne 7 um die Achse 6 aus ihrer Freigabestellung in Richtung auf ihre Schliessstellung. Hierdurch wird dann selbsttätig die Arretiervorrichtung freigegeben, so dass sie unter der Ein- wirkung der Federvorspannung ebenfalls selbst- tätig in ihre Arretierstellung gelangt und dadurch die Kugelpfanne 7 in ihrer Schliessstellung blokkiert. Die beiden Kupplungsteile 2 und 3 sind sodann miteinander gelenkig verbunden, und zwar in jeder beliebigen Richtung um das gemeinsame Kugelzentrum.

Das wesentliche Kriterium der Kugelkopfkupplung 1 liegt darin, dass die Innenfläche 10 der Hohlkugel 5 des Kupplungsgehäuses 4 mit einer Schichtauflage 11 aus verschliessfestem Kunststoff versehen ist, und dass auf die Innenfläche 12 der Kugelpfanne 7 eine entsprechende Schichtauflage 13 aus verschleissfestem Kunststoff trägt.

Die Oberfläche des Kugelkopfes 19 des fahrzeugseitigen Kupplungsteils 3 ist jedoch metallisch blank und möglichst glatt ausgeführt, so dass sie mit geringer Reibung und jegliche Fettschmierung zwischen der Hohlkugel 5 des Kupplungsgehäuses 4 und der Kugelpfanne 7 mit sicherer Umklammerung gehalten ist.

Damit die Schichtauflagen 11 und 13 aus verschleissfestem Kunststoff an der Innenfläche 10 der Hohlkugel 5 und an der Innenfläche 12 der Kugelpfanne 7 sicher haften, ist es vorteilhaft, letztere in ihrer bei der Formgebung entstehen- den, natürlichen Oberflächenrauhigkeit zu belas- sen oder sogar bewusst Narben, Riefen oder dergleichen einzuarbeiten. Hierin können sich dann die Schichtauflagen 11 und 13 aus Kunststoff genügend sicher verankern.

Die beschriebene Ausgestaltung einer Kugelkopfkupplung zu Verbindung von Anhängern mit einem Zugfahrzeug hat den beträchtlichen Vorteil, dass die wünschenswerten geringen Reibwerte bei gleichzeitig beträchtlich verminderten Verschleisserscheinungen unter Vermeidung jeg- licher Fettschmierung erreicht wird und dass auch die Benutzung zusätzlicher Hilfsmittel zur Abschirmung der Oberflächen des Kugelkopfes 9 am Kupplungsteil 3 vermieden wird.

**Patentansprüche**

1. Kugelkopfkupplung (1) für Anhänger mit einem Kupplungsgehäuse (4), das an seinem vorderen Ende als Teil einer Hohlkugel (5) ausgebildet ist und in dem schwenkbar eine Kugelpfanne (7) sitzt, wobei die Hohlkugel und die Kugelpfanne mit einem an einem Zugfahrzeug befestigten Kugelkopf (9) in Eingriff bringbar sind und die Kugelpfanne in ihrer Eingriffslage relativ zur Hohlkugel des Kupplungsgehäuses arretierbar ist, dadurch gekennzeichnet, dass die Innenfläche (10) der Hohlkugel (5) des Kupplungsgehäuses (4) und die Innenfläche (12) der Kugelpfanne (7) mit einer Schichtauflage (11, 13) aus verschleissfestem Kunststoff versehen sind.

2. Kugelkopfkupplung nach Anspruch 1, da- durch gekennzeichnet, dass die Kunststoff- schicht (11 und 12) aus Polytetrafluoräthylen besteht.

3. Kugelkopfkupplung nach einem der Ansprüche 1 und 2, dadurch gekennzeichnet, dass die verschleissfeste Kunststoffschicht (11 und 13) mindestens auf natürlich rauhe, vorzugsweise aber auf mechanisch, elektrisch oder chemisch aufgerauhte, Flächen der Hohlkugel (5) und der Kugelpfanne (7) aufgebracht ist.

**Claims**

1. A ballhead coupling (1) for trailers, having a coupling housing (4) which at its front end is made as part of a hollow ball (5) and in which a ball cup (7) is pivotally seated, where the hollow ball and the ball cup may be brought into engagement with a ballhead (9) fastened to a towing vehicle and the ball cup may be locked relatively to the hollow ball of the coupling housing in its position of engagement, characterized in that the inner face (10) of the hollow ball (5) of the coupling housing (4) and the inner face (12) of the ball cup (7) are provided with a coating (11, 13) of a layer of wear-resistant plastics.

2. A ballhead coupling as in Claim 1, characterized in that the layer (11 and 12) of plastics consists of polytetrafluorethylene.

3. A ballhead coupling as in one of the Claims 1 and 2, characterized in that the wear-resistant layer (11 and 13) of plastics is applied at least to naturally rough but preferably to mechanically, electrically or chemically roughened areas of the hollow ball (5) and ball cup (7).

**Revendications**

1. Accouplement à tête sphérique (1) pour remorque constitué par un carter d'accouplement qui, à son extrémité avant, a la forme d'une partie de sphère creuse (5) et dans lequel un coussinet sphérique (7) est monté de manière à pouvoir pivoter, la sphère creuse et le coussinet sphérique pouvant s'engager sur une tête sphérique (9) fixée à un véhicule tracteur et le coussinet sphérique pouvant être maintenu dans sa position d'engagement par rapport à la sphère creuse du carter d'accouplement, caractérisé en ce que la surface intérieure (10) de la sphère (5) du carter d'accouplement (4) et la surface intérieure (12) du coussinet sphérique (7) comportent une couche de revêtement (11, 13) en matière plastique résistant à l'usure.

2. Accouplement à tête sphérique selon la revendication 1, caractérisé en ce que la couche de matière plastique (11 et 12) est en polytétrafluoréthylène.

3. Accouplement à tête sphérique selon l'une des revendications 1 ou 2, caractérisé en ce que la couche de matière plastique (11 et 13) résistant à l'usure est appliquée au moins sur des surfaces de la sphère creuse (5) et du coussinet sphérique (7) qui sont naturellement rugueuses, mais de préférence rendues rugueuses par des moyens mécaniques, électriques ou chimiques.